# EUROPEAN PATENT APPLICATION

(11) **EP 1 517 428 A2**
(43) Date of publication of application: **23.03.2005**
(21) Application number: 04104399.3
(22) Date of filing: 13.09.2004
(51) Int. Cl.: H02K 15/03

(54) **Magnetizer of a permanent magnetic rotor**

(30) Priority: 17.09.2003 KR 2003064483
(71) Applicant: LG Electronics Inc., Seoul (KR)
(72) Inventor: Han, Seung-Do, Incheon (KR); Shin, Hyoun-Jeong, Incheon (KR); Ahn, Jun-Ho Mokdong Sinsigaji Apt. 1028-1504, Seoul (KR)
(74) Representative: Gille Hrabal Struck Neidlein Prop Roos

(57) **Abstract**

Disclosed is a magnetizing apparatus for the magnetic rotor of an induction motor with a supplementary magnetic rotor comprising an outer magnetizer arranged at an outer circumferential surface of the magnetic rotor; an inner magnetizer arranged at an inner circumferential surface of the magnetic rotor, for and a power supply for supplying a power to the outer magnetizer and to the inner magnetizer. The magnetic rotor is simultaneously magnetized from outer and inner circumferential surfaces, so that the magnetization of the magnetic rotor is increased and a motor efficiency is enhanced.

## Description

### BACKGROUND OF THE INVENTION

### 1. Field of the Invention

The present invention relates to a magnet of an induction motor, and more particularly, to a magnet of an induction motor capable of enhancing a motor efficiency by increasing an effective magnetization area of the magnet, and a magnetizing apparatus thereof.

### 2. Description of the Conventional Art

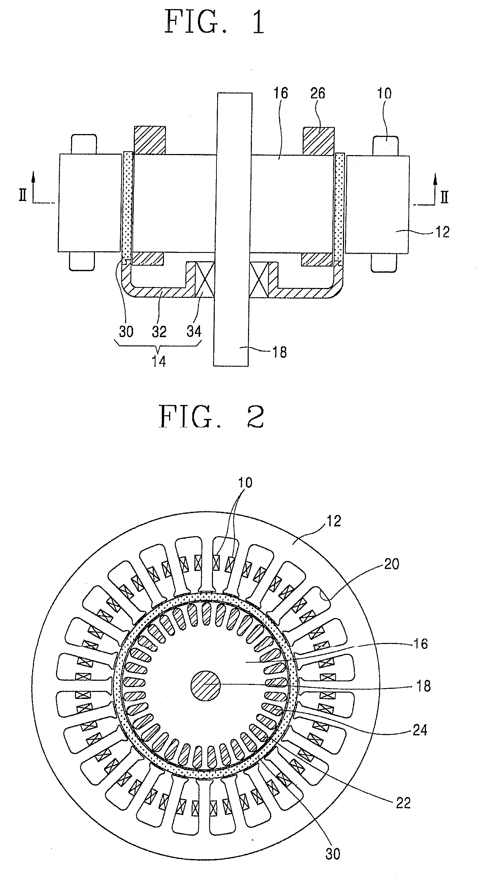

FIG. 1 is a longitudinal section view showing a general induction motor in accordance with the conventional art, and FIG. 2 is a sectional view taken along line II-II of FIG. 1.

Generally, an induction motor comprises: a stator 12 having a driving coil 10 at an inner circumferential surface thereof; a magnet rotor 14 arranged at the inner circumferential surface of the stator 12 with a first air gap and freely rotated by a rotating magnetic field generated from the stator 12, for generating a rotating magnetic field having a strong magnetic flux; an induction rotor 16 arranged at an inner circumferential surface of the magnet rotor 14 with a second air gap and rotated by a rotating magnetic field generated from the magnet rotor 14; and a rotation shaft 18 fixed to the center of the induction rotor 16 and rotated together with the induction rotor 16, for transmitting a rotational force to outside.

The stator 12 is formed as a plurality of sheets are stacked, and a plurality of slots 20 are formed at an inner circumferential surface thereof with the same interval. A driving coil 10 to which a current is applied is respectively wound between the slots 20.

The induction rotor 16 is formed as a plurality of sheets are stacked, and penetration holes 22 are formed at an edge thereof in a circumferential direction with the same interval. A conductive bar 24 is respectively inserted into the penetration holes 22, and an end ring 26 is connected to both ends of the induction rotor 16 thus to cause an electric shortening.

The magnet rotor 14 is composed of: a cylindrical magnet 30 arranged between the stator 12 and the induction rotor 16 with the first and second air gaps; a magnet supporter 32 mounted at one side of the magnet 30, for supporting the magnet 30; and a bearing 34 installed between the magnet supporter 32 and an outer circumferential surface of the rotation shaft 18, for rotatably supporting the magnet supporter 32.

Operation of the induction motor will be explained as follows.

When a power source is applied to the driving coil 10, the magnet 30 is rotated by a rotating magnetic field generated from the stator 12 and thereby a rotating magnetic field having a strong flux is generated. By the rotating magnetic field of the magnet 30, the induction rotor 16 is rotated. According to this, the rotation shaft 18 fixed to the center of the induction rotor 16 is rotated thereby to transmit a rotational driving force to outside.

The magnet 30 is mounted at the magnet supporter 32, and the bearing 34 is mounted between the magnet supporter 32 and the rotation shaft 18, thereby freely rotating the magnet 30.

In the induction motor, the magnet 30 is rotated by the rotating magnetic field generated from the stator 12, and the induction rotor 16 is rotated by a rotating magnetic field having a strong flux generated by the rotation of the magnet 30, thereby performing a high efficiency driving and generating a low noise.

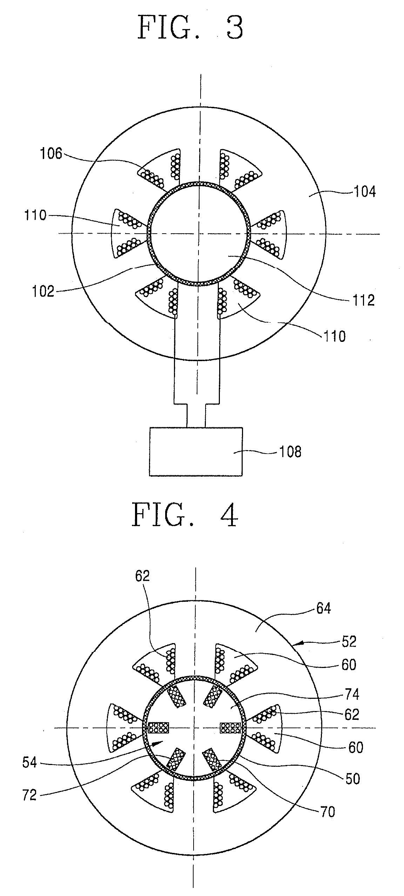

FIG. 3 is a construction view showing a magnetizing apparatus in accordance with the conventional art.

The conventional magnetizing apparatus comprises: an outer magnetizing yoke 104 arranged at an outer circumferential surface of a magnetic substance 102 formed as a cylindrical shape; an outer magnetizing coil 106 wound on an inner circumferential surface of the outer magnetizing yoke 104 with the same interval and to which a power source is applied; a back yoke 112 arranged at an inner circumferential surface of the magnetic substance 102 and forming a magnetic path; and a magnetizing power supplier 108 for supplying a power source to the outer magnetizing coil 106.

The outer magnetizing yoke 104 formed as a cylindrical shape is provided with the cylindrical magnetic substance 102 at an inner portion thereof, and a plurality of slots 110 on which the outer magnetizing coil 106 is wound are formed at an inner circumferential surface thereof with the same interval.

In the conventional magnetizing apparatus, when a power source is applied to the outer magnetizing coil 106 from the magnetizing power supplier 108, a magnetic field is generated thus to magnetize an outer circumferential surface of the magnetic substance 102 and thereby to fabricate a magnet 30.

However, since the conventional magnetizing apparatus magnetizes the outer circumferential surface of the magnetic substance 102 by being installed at the outer circumferential surface of the magnetic substance 102, an effective magnetic flux density is greatly lowered at a part where the slot 110 of the outer magnetizing yoke 104 is formed. According to this, a saturation magnetizing field is not formed and thus an area that the magnetic substance 102 is magnetized is decreased, thereby weakening a magnetic force of the magnet and lowering a motor efficiency.

### SUMMARY OF THE INVENTION

Therefore, an object of the present invention is to provide a magnet of an induction motor capable of increasing a magnetic force and enhancing a motor efficiency by enlarging a magnetized area of a magnetic substance by simultaneously magnetizing an outer circumferential surface and an inner circumferential surface of the magnetic substance by respectively installing an outer magnetizing yoke and an inner magnetizing yoke at the outer circumferential surface and the inner circumferential surface of the magnetic substance, and a magnetizing apparatus thereof.

To achieve these and other advantages and in accordance with the purpose of the present invention, as embodied and broadly described herein, there is provided a magnetizing apparatus of an induction motor comprising: an outer magnetizer arranged at an outer circumferential surface of a magnetic substance that forms a magnet of an induction motor, for magnetizing the outer circumferential surface of the magnetic substance; an inner magnetizer arranged at an inner circumferential surface of the magnetic substance, for magnetizing the inner circumferential surface of the magnetic substance; and a magnetizing power supplier for supplying a magnetizing power source to the outer magnetizer and the inner magnetizer.

The outer magnetizer is composed of: an outer magnetizing yoke arranged at the outer circumferential surface of the magnetic substance and having a plurality of slots at an inner circumferential surface thereof with the same interval; and an outer magnetizing coil respectively wound on the slots and to which a power source from the magnetizing power supplier is applied.

The inner magnetizer is composed of: an inner magnetizing yoke formed at the inner circumferential surface of the magnetic substance and having a plurality of slots at an outer circumferential surface thereof with the same interval; and an inner magnetizing coil respectively wound on the slots and to which a power source from the magnetizing power supplier is applied.

A magnet of an induction motor according to the present invention comprises: a stator having a driving coil wound at an inner circumferential surface thereof; a magnet rotor arranged at an inner circumferential surface of the stator with a first air gap and having a magnet to be freely rotated by a rotating magnetic field generated from the stator, for generating a rotating magnetic field having a strong magnetic flux; and an induction rotor arranged at an inner circumferential surface of the magnet rotor with a second air gap and rotated by a rotating magnetic field generated from the magnet rotor, wherein the outer circumferential surface and the inner circumferential surface of the magnet are simultaneously magnetized.

The magnetizing apparatus of an induction motor comprises: an inner magnetizing yoke formed at an inner circumferential surface of a magnetic substance that forms a magnet of an induction motor and having a plurality of slots at an outer circumferential surface thereof with the same interval; an inner magnetizing coil respectively wound on the slots and to which a power source is applied; and a magnetizing power supplier for supplying a magnetizing power source to the inner magnetizing coil.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a longitudinal section view showing a general induction motor;
FIG. 2 is a sectional view taken along line II-II of FIG. 1;
FIG. 3 is a construction view showing a magnetizing apparatus in accordance with the conventional art;
FIG. 4 is a construction view showing a magnetizing apparatus according to the present invention;
FIG. 5 is a circuit diagram showing a magnetizing power supplier of the magnetizing apparatus of the present invention;
FIG. 6 is a circuit diagram showing another embodiment of the magnetizing power supplier of the magnetizing apparatus of the present invention;
FIG. 7 is a construction view showing a magnetizing apparatus according to a second embodiment of the present invention; and
FIGs. 8 and 9 are graphs respectively showing an intensity of a magnetic field magnetized by the magnetizing apparatuses according to the conventional art and the present invention.

### DETAILED DESCRIPTION OF THE PREFERRED EMBODIMENTS

Reference will now be made in detail to the preferred embodiments of the present invention, examples of which are illustrated in the accompanying drawings.

Hereinafter, a magnetizing apparatus of an induction motor according to the present invention will be explained with reference to the attached drawings as follows.

Even if a plurality of preferred embodiments of the magnetizing apparatuses of an induction motor can exist in the present invention, the most preferred embodiment will be explained.

FIG. 4 is a construction view showing a magnetizing apparatus according to a first embodiment of the present invention.

Referring to FIGs. 1 and 2, an induction motor of the present invention comprises: a stator 12 having a driving coil 10 wound on an inner circumferential surface thereof; a magnet rotor 14 arranged at an inner circumferential surface of the stator 12 with a first air gap and freely rotated by a rotating magnetic field generated from the stator 12, for generating a rotating magnetic field having a strong magnetic flux; an induction rotor 16 arranged at an inner circumferential surface of the magnet rotor 14 with a second air gap and rotated by a rotating magnetic field generated from the magnet rotor 14; and a rotation shaft 18 fixed to the center of the induction rotor 16 and rotated together with the induction rotor 16, for transmitting a rotational force to outside.

The stator 12 is formed as a plurality of sheets are stacked, and a plurality of slots 20 are formed at an inner circumferential surface thereof with the same interval. A driving coil 10 to which a current is applied is respectively wound between the slots 20.

The induction rotor 16 is formed as a plurality of sheets are stacked, and penetration holes 22 are formed at an edge thereof in a circumferential direction with the same interval. A conductive bar 24 is respectively inserted into the penetration holes 22, and an end ring 26 is connected to both ends of the induction rotor 16 thus to cause an electric shortening.

The magnet rotor 14 is composed of: a cylindrical magnet 30 arranged between the stator 12 and the induction rotor 16 with the first and second air gaps; a magnet supporter 32 mounted at one side of the magnet 30, for supporting the magnet 30; and a bearing 34 installed between the magnet supporter 32 and an outer circumferential surface of the rotation shaft 18, for rotatably supporting the magnet supporter 32.

The magnetizing apparatus of the induction motor will be explained as follows.

As shown in FIG. 4, the magnetizing apparatus of the induction motor comprises: an outer magnetizer 52 arranged at an outer circumferential surface of a magnetic substance 50 to be magnetized, for magnetizing the outer circumferential surface of the magnetic substance 50; an inner magnetizer 54 arranged at an inner circumferential surface of the magnetic substance 50, for magnetizing the inner circumferential surface of the magnetic substance 50; and a magnetizing power supplier 56 for supplying a magnetizing power source to the outer magnetizer 52 and the inner magnetizer 54.

The outer magnetizer 52 is composed of: an outer magnetizing yoke 64 arranged at the outer circumferential surface of the magnetic substance 50 and having a plurality of slots 60 at an inner circumferential surface thereof with the same interval; and an outer magnetizing coil 62 respectively wound on the slots 62 and to which a power source from the magnetizing power supplier 56 is applied.

The inner magnetizer 54 is composed of: an inner magnetizing yoke 74 formed at the inner circumferential surface of the magnetic substance 50 and having a plurality of slots 70 at an outer circumferential surface thereof with the same interval; and an inner magnetizing coil 72 respectively wound on the slots 70 and to which a power source is applied from the magnetizing power supplier 56.

The number of the slots 60 and 70 at which the magnetizing coils 62 and 72 are respectively wound depends on the number of poles of a magnet to be fabricated. In the present invention, six slots 60 and six slots 70 are formed thus to form six poles, respectively.

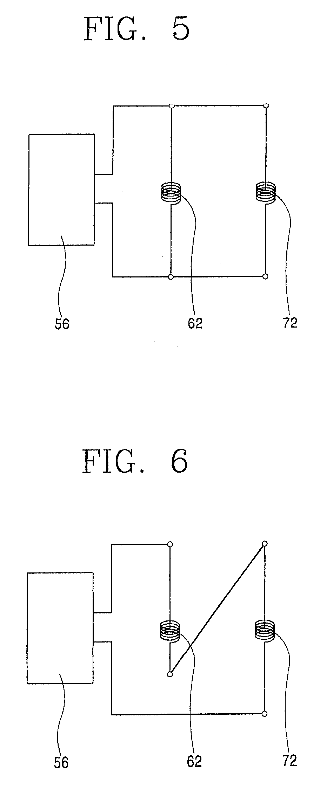

As shown in FIG. 5, the magnetizing power supplier 56 is connected to the outer magnetizing coil 62 and the inner magnetizing coil 72 in parallel. As another embodiment of the magnetizing power supplier 56, as shown in FIG. 6, the outer magnetizing coil 62 and the inner magnetizing coil 72 can be arranged in series.

A magnetizing method of the magnetizing apparatus according to one embodiment of the present invention will be explained as follows.

First, the magnetic substance 50 having an outer diameter and an inner diameter is formed between the stator 12 and the induction rotor 16 as a cylindrical shape.

Then, the outer magnetizer 52 is arranged at the outer circumferential surface of the magnetic substance 50, and the inner magnetizer 54 is arranged at the inner circumferential surface of the magnetic substance 50. When a power source is respectively supplied to the outer magnetizer 62 and the inner magnetizer 72 from the magnetizing power supplier 56, the outer circumferential surface and the inner circumferential surface of the magnetic substance 50 are simultaneously magnetized.

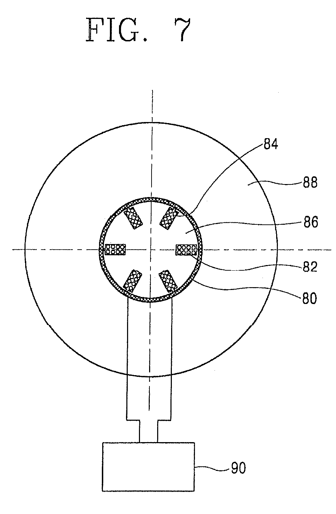

FIG. 7 is a construction view showing a magnetizing apparatus according to a second embodiment of the present invention.

The magnetizing apparatus according to the second embodiment of the present invention is for magnetizing an inner circumferential surface of a magnetic substance 80. The magnetizing apparatus comprises: an inner magnetizing yoke 86 arranged at an inner circumferential surface of the magnetic substance 80 and having a plurality of slots 84 at an outer circumferential surface thereof with the same interval; an inner magnetizing coil 82 respectively wound between the slots 84 and to which a power source is applied; a back yoke 88 arranged at an outer circumferential surface of the magnetic substance 80 and forming a magnetic path; and a magnetizing power supplier 90 for supplying a magnetizing power to the inner magnetizing coil 82.

In the magnetizing apparatus according to the second embodiment, the inner magnetizing yoke 86 on which the inner magnetizing coil 82 is wound is arranged at the inner circumferential surface of the magnetic substance 80, and the back yoke 88 is arranged at the outer circumferential surface of the magnetic substance 80. Then, a power source is supplied to the inner magnetizing coil 82 from the magnetizing power supplier 90, thereby magnetizing the inner circumferential surface of the magnetic substance 80.

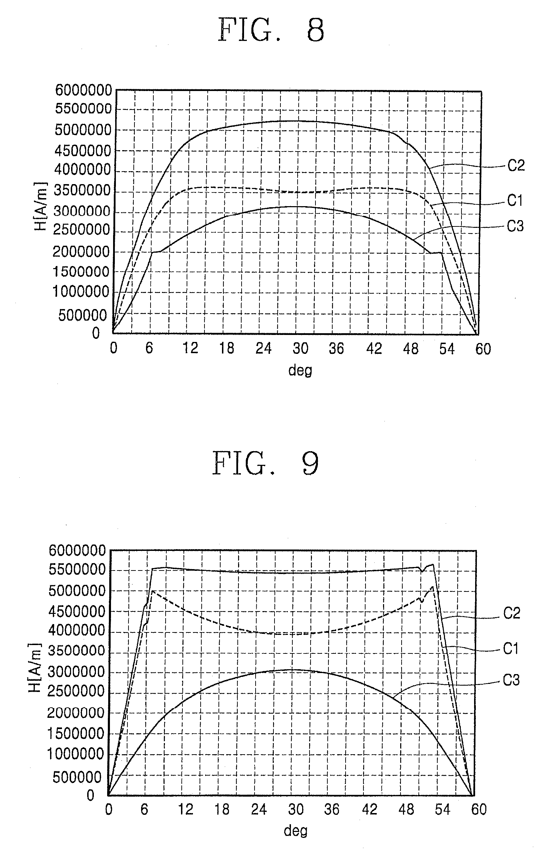

FIG. 8 shows graphs comparing a magnetic field intensity of an outer circumferential surface of a magnet magnetized by the conventional magnetizing apparatus with that according to the present invention, and FIG. 9 shows graphs comparing a magnetic field intensity of an inner circumferential surface of a magnet magnetized by the conventional magnetizing apparatus with that according to the present invention.

As shown in FIGs. 8 and 9, the magnetic field intensities C2 of outer and inner circumferential surfaces of a magnet fabricated by a magnetizing apparatus according to one embodiment of the present invention and the magnetic field intensities C1 of outer and inner circumferential surfaces of a magnet fabricated by a magnetizing apparatus according to a second embodiment of the present invention are much greater than the magnetic field intensities C3 of outer and inner circumferential surfaces of a magnet fabricated by a magnetizing apparatus according to the conventional art. In the magnetizing apparatus of the induction motor according to the present invention, the outer magnetizer is arranged at the outer circumferential surface of the magnetic substance, and the inner magnetizer is arranged at the inner circumferential surface of the magnetic substance, thereby simultaneously magnetizing the outer circumferential surface and the inner circumferential surface of the magnetic substance. According to this, a magnetic flux intensity of a fabricated magnet is increased, and thus a motor efficiency is enhanced.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A magnetizing apparatus of an induction motor comprising:
an outer magnetizer arranged at an outer circumferential surface of a magnetic substance that forms a magnet of an induction motor, for magnetizing the outer circumferential surface of the magnetic substance;
an inner magnetizer arranged at an inner circumferential surface of the magnetic substance, for magnetizing the inner circumferential surface of the magnetic substance; and
a magnetizing power supplier for supplying a magnetizing power source to the outer magnetizer and the inner magnetizer.

2. The magnetizing apparatus of claim 1, wherein the outer magnetizer is composed of:
an outer magnetizing yoke arranged at the outer circumferential surface of the magnetic substance and having a plurality of slots at an inner circumferential surface thereof with the same interval; and
an outer magnetizing coil respectively wound on the slots and to which a power source is applied from the magnetizing power supplier.

3. The magnetizing apparatus of claim 1, wherein the inner magnetizer is composed of:
an inner magnetizing yoke formed at the inner circumferential surface of the magnetic substance and having a plurality of slots at an outer circumferential surface thereof with the same interval; and
an inner magnetizing coil respectively wound on the slots and to which a power source is applied from the magnetizing power supplier.

4. The magnetizing apparatus of claim 1, wherein the magnetizing power supplier supplies a power source to the outer magnetizing coil and the inner magnetizing coil connected to each other in parallel.

5. The magnetizing apparatus of claim 1, wherein the magnetizing power supplier supplies a power source to the outer magnetizing coil and the inner magnetizing coil connected to each other in series.

6. A magnetizing apparatus of an induction motor comprising:
an inner magnetizing yoke formed at an inner circumferential surface of a magnetic substance that forms a magnet of an induction motor and having a plurality of slots at an outer circumferential surface thereof with the same interval;
an inner magnetizing coil respectively wound on the slots and to which a power source is applied; and
a magnetizing power supplier for supplying a magnetizing power source to the inner magnetizing coil.

7. The magnetizing apparatus of claim 6 further comprising a back yoke arranged at an outer circumferential surface of the magnetic substance and forming a magnetic path.

8. A magnet of an induction motor comprising:
a stator having a driving coil wound at an inner circumferential surface thereof;
a magnet rotor arranged at an inner circumferential surface of the stator with a first air gap and having a magnet to be freely rotated by a rotating magnetic field generated from the stator, for generating a rotating magnetic field having a strong magnetic flux; and
an induction rotor arranged at an inner circumferential surface of the magnet rotor with a second air gap and rotated by a rotating magnetic field generated from the magnet rotor, wherein the outer circumferential surface and the inner circumferential surface of the magnet are simultaneously magnetized.

9. The magnet of claim 8, wherein the outer circumferential surface of the magnet is provided with an outer magnetizer, the inner circumferential surface of the magnet is provided with an inner magnetizer, and thereby the outer and inner circumferential surfaces thereof are simultaneously magnetized when a power source is applied thereto.

10. A magnet of an induction motor comprising:
a stator having a driving coil wound at an inner circumferential surface thereof;
a magnet rotor arranged at an inner circumferential surface of the stator with a first air gap and having a magnet to be freely rotated by a rotating magnetic field generated from the stator, for generating a rotating magnetic field having a strong magnetic flux; and
an induction rotor arranged at an inner circumferential surface of the magnet rotor with a second air gap and rotated by a rotating magnetic field generated from the magnet rotor, wherein the magnet is formed as an inner circumferential surface thereof is magnetized.

11. The magnet of claim 10, wherein the magnet is provided with an inner yoke on which an inner magnetizing coil is wound at an inner circumferential surface thereof, the magnet is provided with a back yoke at an outer circumferential surface thereof, and thereby the inner circumferential surface of the magnet is magnetized when a power source is applied to the inner magnetizing coil.
